# EUROPEAN PATENT SPECIFICATION

(11) **EP 0 993 139 B1**
(45) Date of publication and mention of the grant of the patent: **10.12.2003**
(21) Application number: 98402481.0
(22) Date of filing: 05.10.1998
(51) Int. Cl.: H04L 1/18

(54) **Go-back-N automatic-repeat-request protocol on virtual circuits**
Automatische WiederholungsanforderungsProtokoll der "go-back-N" Art über virtuellen Verbindungen
Protocole de demande automatique de retransmission avec mémoire a N blocs sur circuits virtuels

(43) Date of publication of application: 12.04.2000
(73) Proprietor: Mitsubishi Electric Information Technology Centre Europe B.V., 1119 NS Schiphol Rijk (NL)
(72) Inventor: Shikama, Toshihiro, 35700 Rennes (FR)
(74) Representative: Maillet, Alain

(56) References cited:
- EP-A- 0 193 091
- EP-A- 0 377 136
- ARGENTI F.; BENELLI G.: "AN ARQ PROTOCOL FOR MOBILE RADIO SYSTEMS" SUPERCOMM/ICC '92. DISCOVERING A NEW WORLD OF COMMUNICATIONS, vol. 3, 14 - 18 June 1992, pages 1323-1326, XP000337928 Chicago, IL, USA
- BENELLI G: "GO-BACK-N ARQ SCHEME WITH BUFFER AT THE RECEIVER" IEE PROCEEDINGS: RADAR, SONAR & NAVIGATION, vol. 133, no. 3, PART F, June 1986, pages 271-276, XP000760524 UK
- DENG, ROBERT H.: "HYBRID ARQ SCHEMES FOR POINT-TO-MULTIPOINT COMMUNICATION OVER NONSTATIONARY BROADCAST CHANNELS" IEEE TRANSACTIONS ON COMMUNICATIONS, vol. 41, no. 9, September 1993, pages 1379-1387, XP000396697 USA

## Description

The present invention concerns a method of managing errors in packets transmitted over at least one transmission link between a transmitter and a receiver.

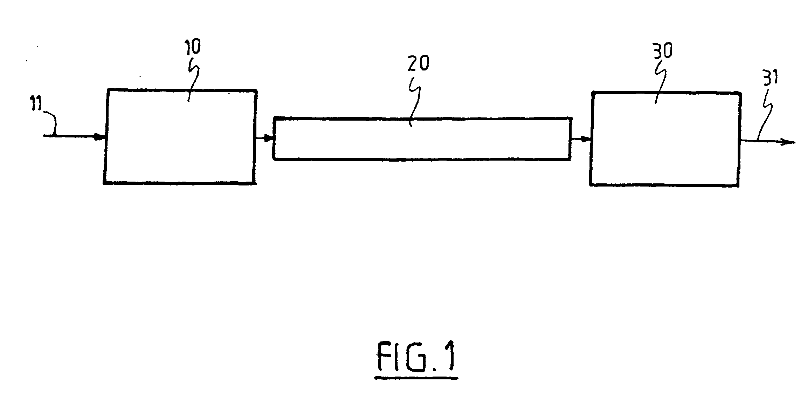

The present invention applies to a transmission system of the type depicted in Fig. 1. In this Fig. 1, a transmitter 10 can be seen which receives packets from an input multiplex 11 and which transmits them, in the form of sequences of packets, to a receiver 30 via a transmission line 20. The receiver 30, when the packets have been received correctly, delivers them to an upper system layer taken them into consideration, for example in order to deliver them to an output multiplex 31.

The transmitter 10 and receiver 30 use a protocol for checking errors on the transmission line 20 and for retransmitting packets which have not been correctly received by the receiver 30. Such protocols are known as ARQ (Automatic Repeat reQuest) protocols. In general terms, according to these protocols, when the receiver detects an error in a packet, it requests the transmitter to retransmit this packet.

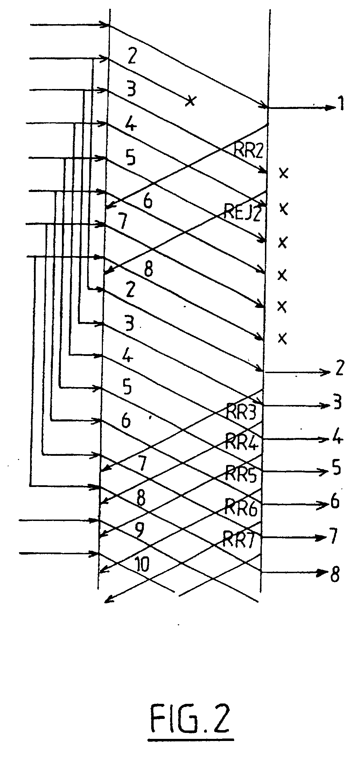

Amongst such protocols, the present invention relates to the one which names "Go-back-N". In Fig. 2, this protocol is illustrated by an example embodiment.

The left-hand part of this Fig. 2 is a diagram showing, on the transmitter 10 side, the transmission of packets as a function of time (the time elapses downwards) and the one on the right is a diagram showing, on the receiver 30 side, the reception of packets also transmitted as a function of time. As for the central part, this depicts the transmission of packets over the transmission line 20.

In this Fig. 2, the scenario is as follows. The packet 1 has been received correctly on the receiver 30 side and has therefore been delivered to the output multiplex 31. An acknowledgement packet RR2 is sent by the receiver 30 to the transmitter 10. The packet 2 has not been received correctly by the receiver. In the example in Fig. 2, the packet 2 has not been received and the receiver 30 notes this only on reception of the packet 3, which is therefore not received in the correct order of transmission. On one hand, a negative acknowledgement packet REJ2 is sent by the receiver 30 to the transmitter 10, and on the other hand, packets 3 to 8 received subsequently to the detection of errors and until the correct reception of the erroneous packet 2 are, although received correctly, discarded (illustration by crosses in Fig. 2). After reception of the negative acknowledgement packet REJ2, the transmitter 10 retransmits packet 2 and the following packets. On reception of each packet 2 to 8, the receiver sends an acknowledgement packet RR3 to RR8.

Thus, according to this protocol, the packets which are received after a packet has been lost and until the correct reception of this packet are discarded and they are retransmitted by the transmitter in the order of the packets in the sequence, as from the retransmission of the erroneous packet.

A drawback of this protocol lies in the fact that, although they have been correctly received, the discarded packets must be retransmitted, which delays the time at which they are taken into account for their delivery to the output multiplex 31.

The aim of the present invention is therefore to propose a method of managing errors in packets transmitted over at least one transmission link between a transmitter and a receiver, and a method of controlling errors which are of the type previously described but which improve the performance thereof, notably with regard to the packet transmission time.

A method of managing errors is known by a document titled "An ARQ protocol for mobile radio systems" and published in the review "Discovering a new world of communications, vol. 3, 14-18 June 1992, pages 1323-1326, XP0003379928. The method consists in retaining, at the receiver side, the packets which have been correctly received between the detection of the lost packet and its correct reception following its re-transmission by the transmitter, in delivering to the output multiplex on correct reception of the lost packet said lost packet and all said retained packets.

The aim of the present invention in respect of this method is to avoid as possible as it can be the re-transmission of packets which have been correctly received in order to limit the packet rate in the link from the transmitter toward the receiver.

To this end, a method according to the invention is characterised in that it consists, on the receiver side, on correct reception of the lost packet, in sending to the transmitter an acknowledgement packet indicating that it and all the packets which had been retained and which have been delivered have been correctly received, and, on the transmitter side on reception of said acknowledgement packet, in stopping any retransmission of packets which have already been transmitted with a serial sequence number lower than or equal to that borne by the last of these packets.

According to another feature of the invention, it consists, on the transmitter side, on storing the sequence number of the last packet transmitted before the retransmission of the lost packet, and, if the acknowledgement packet acknowledges packet bearing this number or previous packets, in not judging it erroneous and in taking it into consideration and, in other cases, in judging it erroneous and in ot taking it into consideration.

According to another feature of the invention, the packets transmitted over said at least transmission link belong to a plurality of virtual circuits, said method consisting then in retaining only those packets that belong to the same virtual circuit as the lost packet, the other packets being normally delivered to the output multiplex, and, when the lost packet is received because of its re-transmission by the transmitter, in delivering said lost packet and all the packets belonging to the same virtual circuit that were retained, and in discarding the following packets that are received because of their re-transmission by the transmitter and that have been already delivered.

According to another feature of the invention, the packets that are delivered to the output multiplex after the receiver notes a packet has been lost are not immediately acknowledged, but only when they are received following their re-transmission by the transmitter.

According to another feature of the invention, it consists, on the receiver side on correct reception of the lost packet, in sending to the transmitter an acknowledgement packet indicating that it and all the packets which had been retained and which have been delivered have been correctly received, and, on the transmitter side on reception of said acknowledgement packet, in stopping any retransmission of packets which have already been transmitted with a serial number in the sequence lower than or equal to that borne by the last of these packets.

According to another feature of the invention, it consists, on the transmitter side, on storing the sequence number of the last packet emitted before the retransmission of the lost packet, and, if the acknowledgement packet acknowledges packet bearing this number or previous packets, in not judging it erroneous and in taking it into consideration and, in other cases, in judging it erroneous and in ot taking it into consideration.

The characteristics of the invention mentioned above, as well as others, will emerge more clearly from a reading of the following description of several embodiments of the invention, the said description being given in relation to the accompanying drawings, amongst which:
Fig. 1 is a block diagram of a transmission system to which the present invention can apply,
Fig. 2 is a diagram illustrating an error management method according to the methods of the prior art,
Fig. 3a is a diagram illustrating an error management method according to the methods of the prior art, and
Fig. 3b is a diagram illustrating an error management method according to the present invention.
Fig. 4 is a diagram illustrating an another embodiment of an error management method according to the present invention.

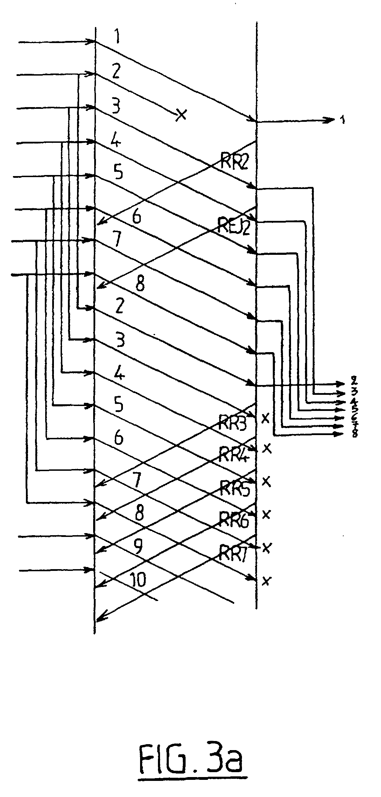

The method depicted in Fig. 3a is now described.

As in Fig. 2, the left-hand part of this Fig. 3a is a diagram showing, on the transmitter 10 side, the transmission of packets as a function of time (the time elapses downwards) and the right-hand part is a diagram showing, on the receiver 30 side, the reception of packets transmitted, also as a function of time. As for the central part, this shows the transmission of the packets over the transmission line 20.

In this Fig. 3a, the scenario is as follows. Packet 1 has been received correctly on the receiver 30 side and has therefore been delivered to the multiplex 31. An acknowledgement packet RR2 is sent by the receiver 30 to the transmitter 10.

Packet 2 has not been received correctly by the receiver. More precisely, packet 2 has not been received and the receiver 30 does not notice this until reception of packet 3, which is therefore not received in the order of transmission. A negative acknowledgement packet REJ2 is sent at this moment by the receiver 30 to the transmitter 10.

The following packets 3 to 8 are transmitted by the transmitter 10 and received correctly by the receiver 30. These packets 3 to 8 are not discarded, as in the protocol of the prior art, but are retained, that is to say, they are stored whilst awaiting their taking into consideration by the upper layer with a view to their being delivered to the output multiplex 31.

On reception of the negative acknowledgement packet REJ2, the transmitter 10 retransmits packet 2, which is then correctly received by the receiver 30. At this moment, packet 2 is taken into consideration by the upper system layer and is delivered to the multiplex 31, but the same applies to packets 3 to 8, which have been received correctly and which had been retained.

Nevertheless, it can be seen that, after reception of the negative acknowledgement packet REJ2, the transmitter does not retransmit solely packet 2 but also following packets in the order of the packets in the sequence. Packets 3 to 8 which had been correctly received, which have been retained, and which are then delivered, are, after a new reception following the retransmission to which they are subject, now discarded. Moreover, on reception of each of packets 2 to 7, the receiver 30 sends an acknowledgement packet RR3 to RR8.

Thus, according to the method of the invention, the packets which are received after the reception of a lost packet until the correct reception of this packet are retained, then delivered at the same time as the lost packet which was received correctly is delivered, and then discarded at the time of their new reception following the retransmission to which they are subject on the part of the transmitter.

It should be noted that, on the transmitter side, the process is the same as with the protocol of the prior art as disclosed in relation to Fig. 2, so that the setting up of a method according to the invention does not make it necessary to modify the protocol for the transmitters but only for the receivers.

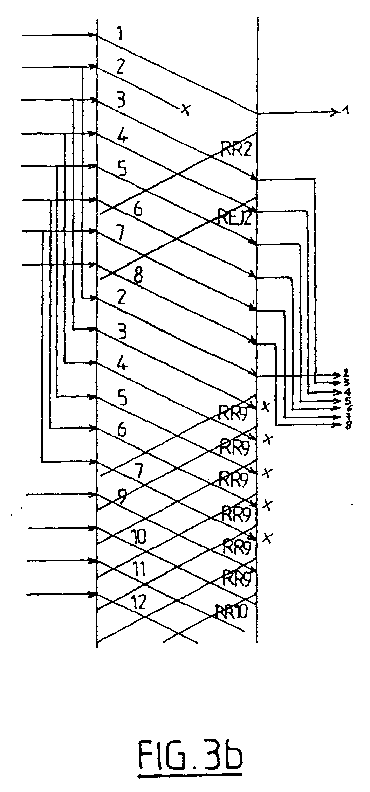

Fig. 3b illustrates an embodiment of a method according to the invention. The difference compared with that of Fig. 3a lies solely in the fact that, on correct reception of a packet 2 (which had not been correctly received and which was therefore retransmitted by the transmitter 10), the receiver 30 transmits to the transmitter 10 an acknowledgement packet RR9, that is to say for packets 2 to 8. This acknowledgement signifies to the transmitter 10 that packets 2 to 8 have been received correctly. On reception of this packet RR9, the transmitter stops the transmission of the packets which have already been transmitted and received correctly, that is to say those which bear a serial number in the sequence lower than that of the acknowledgement RR9. In this case, the packet 8 is not retransmitted. The other packets 3 to 7 which were retransmitted by the transmitter 10 between the retransmission of packet 2 and the reception of the acknowledgement packet RR9 are discarded at the receiver (illustration by crosses).

It should be noted however that the reception by the transmitter 10 of an acknowledgement for packets which have not been retransmitted (in this case packets 3 to 8) is a cause of an error in the conventional Go-Back-N protocol.

In Fig. 3b, on reception by the transmitter 10 of the negative acknowledgement packet REJ2, the transmitter 10 (if it does carry out conventional Go-Back-N protocol) considers that packets 2 to 8 are discarded. It does not expect the case of receiving an acknowledgement for these packets 2 to 8. Such an transmitter 10 ignores the fact that packet 8 has been sent before. At the moment of the reception of the acknowledgement packet RR9, only packets 2 to 7 have been retransmitted. For the transmitter 10, only these packets may be acknowledged. So, the acknowledgement of packets 2 to 8 carried out by the packet RR9 is erroneous.

To overcome this problem, the implementation of the method of the invention requires, unlike the previous implementation of the invention, a modification of the protocol installed at the transmitter 10 side.

To do this, the transmitter 10 stores the sequence number of the last packet emitted before the retransmission of the erroneous packet, in the case of Fig. 3b, the number 8. If the acknowledgement packet RR9 acknowledges packet bearing this number or previous packets, the transmitter 10 does not judge it erroneous and takes it into consideration. In other cases, it does judge it erroneous and does not take it into consideration.

The input multiplex 11 generally bears many virtual circuits. That does not affect the methods depicted on Figs. 3a and 3b because they are carried out without any hypothesis regarding the fact that one packet belongs to a virtual circuit rather than another.

But, to take into account this fact improves the throughput obtained by the method of the invention.

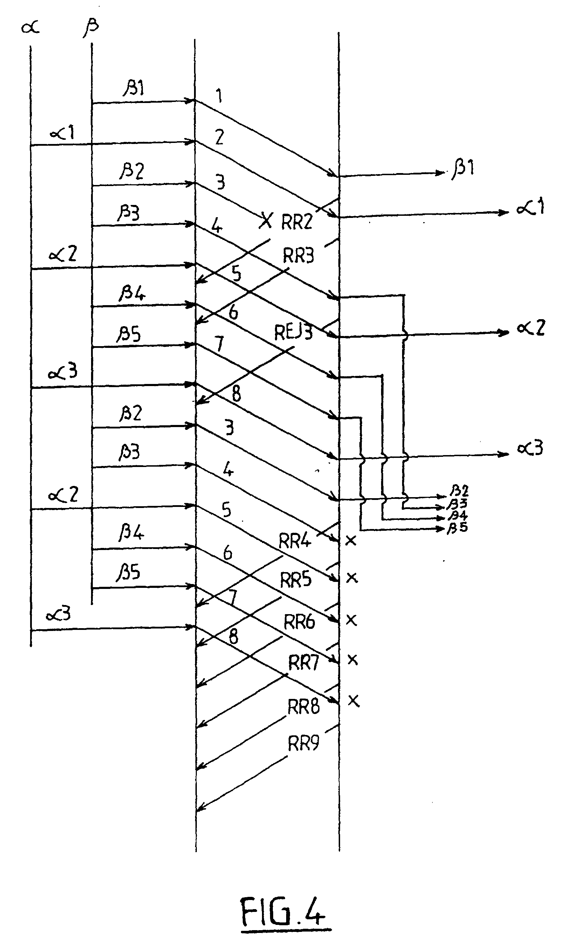

Fig. 4 illustrates a variant embodiment of a method according to the invention that takes into account the belonging of the packets to their virtual circuit.

By way of example, Fig. 4 shows two virtual circuits VC-α and VC-β. These virtual circuits VC-α and VC-β are multiplexed on the transmission line 20 between the transmitter 10 and the receiver 30.

As shown in the diagram of Fig. 4, packet 1 which belongs to the virtual circuit VC-β has been received correctly. So, it is delivered to the output multiplex 31. The same is for packet 2.

Packet 3 from virtual circuit VC-β has been lost and is therefore not received by the receiver 30. On reception of packet 4, which has been correctly received, the receiver 30 notes that the sequence number is not the one expected, and deduced from this fact that packet 3 has been lost. So, it transmits to the transmitter 10 a negative acknowledgement REJ3 requesting the transmitter 10 to re-transmit all the packets from packet 3. This negative acknowledgement REJ3 is received by the transmitter 10 just after packet 8 was transmitted.

During this time, packets 4 to 8 were correctly received. But, as shown on Fig. 4, only those packets 4, 6 and 7 that belong to the same virtual circuit VC-β as the lost packet 3 are retained. The others 5 and 8 are normally delivered to the output multiplex 31.

It should be noted that the delivered packets 5 and 8 are not immediately acknowledged.

When the re-transmitted packet 3 is correctly received, all the packets belonging to the same virtual circuit VC-β that has been retained are delivered to the output multiplex 31. Then, the following packets 4 to 8 that have been re-transmitted and that have been now delivered are discarded (this is indicated on Fig. 4 by a cross at the receiver). When a re-transmitted packet is correctly received, the receiver 30 transmits to the transmitter 10 a corresponding acknowlegment. For example, when packet 3 is received, the receiver 30 sends the acknowledgement RR4. When packet 4 is received, the receiver 30 sends the acknowledgement RR5, and so on, till packet 8.

Generally speaking, according to this embodiment of the invention, when many virtual circuits are involved, only those packets that belong to the same virtual circuit as the lost packet are retained. The other packets which do not belong to the same virtual circuit are delivered. The delivered packets are not immediately acknowledged. When the lost packet is received because of its re-transmission by the transmitter 10, it and all the packets belonging to the same virtual circuit that were retained are delivered. The following packets that are received because of their re-transmission by the transmitter and that have been soon delivered are now discarded. They are also acknowledged.

It should be noted that they can be acknowledged according either the method depicted on Fig. 3a or the method depicted on Fig. 3b.

## Claims

1. Method of managing errors in packets transmitted in the form of a sequence of packets over at least one transmission link (20) between a transmitter (10) and a receiver (30), said method consisting, at the receiver side, when a packet has been correctly received, in delivering said packet to an output multiplex and in sending to the transmitter an acknowledgement packet, and, when the receiver notes a packet has been lost, in sending to the transmitter a negative acknowledgement packet which, when received by the transmitter, makes the transmitter re-transmitting said lost packet and all the following packets between said packet and the last transmitted packet, the receiver (30) retaining the packets which have been correctly received between the detection of the lost packet and its correct reception following its retransmission by the transmitter (10) and, on correct reception of the lost packet, delivering to the output multiplex said lost packet correctly received and all said retained packets, and discarding the packets which are received following their retransmission by the transmitter (10) and which have already been delivered by the receiver (30), **characterised in that** on correct reception of the lost packet, said receiver sends to the transmitter (10) an acknowledgement packet indicating that said lost packet correctly received and all the packets which had been retained and which have been delivered have been correctly received and on reception of said acknowledgement packet, said transmitter stops any retransmission of packets which have already been transmitted with a serial number in the sequence lower than or equal to that borne by the last of these packets.

2. Method of managing errors according to Claim 1, **characterised in that** it consists, on the transmitter (10) side, on storing the sequence number of the last packet emitted before the retransmission of the lost packet, and, if the acknowledgement packet acknowledges packet bearing this number or previous packets, in not judging it erroneous and acknowledging said packet and, in other cases, in judging it erroneous and not acknowledging them.

3. Method of managing errors according one of the claim 1 or 2, **characterised in that** the packets transmitted over said at least transmission link (20) belong to a plurality of virtual circuits, said method consisting then in retaining only those packets that belong to the same virtual circuit as the lost packet, the other packets being normally delivered to the output multiplex, and, when the lost packet is received because of its re-transmission by the transmitter (10), in delivering said lost packet and all the packets belonging to the same virtual circuit that were retained, and in discarding the following packets that are received because of their re-transmission by the transmitter and that have already delivered.

4. Method of managing errors according to claim 3, **characterised in that** it consists, on the receiver side on correct reception of the lost packet, in sending to the transmitter (10) an acknowledgement packet indicating that it and all the packets which had been retained and which have been delivered have been correctly received, and, on the transmitter side on reception of said acknowledgement packet, in stopping any retransmission of packets which have already been transmitted with a serial number in the sequence lower than or equal to that borne by the last of these packets.

5. Method of managing errors according to Claim 4, **characterised in that** it consists, on the transmitter (10) side, on storing the sequence number of the last packet emitted before the retransmission of the lost packet, and, if the acknowledgement packet acknowledges packet bearing this number or previous packets, in not judging it erroneous and acknowledging said packet and, in other cases, in judging it erroneous and not acknowledging them.

## Patentansprüche

1. Verfahren zum Managen von Fehlern in Paketen, die in der Form einer Sequenz von Paketen über wenigstens eine Übertragungsverbindung (20) zwischen einem Sender (10) und einem Empfänger (30) übertragen werden, wobei das Verfahren auf der Empfängerseite dann, wenn ein Paket richtig empfangen worden ist, im Liefern des Pakets zu einem Ausgangsmultiplexer und im Senden eines Bestätigungspakets zum Sender besteht, und dann, wenn der Empfänger bemerkt, dass ein Paket verloren worden ist, im Senden eines negativen Bestätigungspakets zum Sender, das, wenn es vom Sender empfangen wird, veranlasst, dass der Sender das verlorene Paket und alle folgenden Pakete zwischen dem Paket und dem zuletzt gesendeten bzw. übertragenen Paket erneut sendet bzw. überträgt, wobei der Empfänger (30) die Pakete, die zwischen der Erfassung des verlorenen Pakets und seinem richtigen Empfang nach seiner erneuten Übertragung durch den Sender (10) richtig empfangen worden sind, zurückbehält, und auf einen richtigen Empfang des verlorenen Pakets hin das richtig empfangene verlorene Paket und alle zurückbehaltenen Pakete zum Ausgangsmultiplexer liefert und die Pakete, die nach ihrer erneuten Übertragung durch den Sender (10) empfangen werden und die vom Empfänger bereits geliefert worden sind, verwirft, **dadurch gekennzeichnet, dass** der Empfänger auf einen richtigen Empfang des verlorenen Pakets hin ein Bestätigungspaket zum Sender (10) sendet, das anzeigt, dass das richtig empfangene verlorene Paket und alle Pakete, die zurückbehalten worden waren und die geliefert worden sind, richtig empfangen worden sind, und der Sender auf einen Empfang des Bestätigungspakets hin jede erneute Übertragung von Paketen, die bereits übertragen worden sind, mit einer seriellen Nummer in der Sequenz, die niedriger als die durch das letzte dieser Pakete getragene oder gleich dieser ist, stoppt.

2. Verfahren zum Managen von Fehlern nach Anspruch 1, **dadurch gekennzeichnet, dass** es auf der Seite des Senders (10) auf ein Speichern der Sequenznummer des vor der erneuten Übertragung des verlorenen Pakets ausgesendeten letzten Pakets hin und dann, wenn das Bestätigungspaket ein diese Nummer tragendes Paket oder vorherige Pakete bestätigt, darin besteht, es als nicht fehlerhaft zu beurteilen und das Paket zu bestätigen und es in anderen Fällen als fehlerhaft zu beurteilen und sie nicht zu bestätigen.

3. Verfahren zum Managen von Fehlern nach Anspruch 1 oder 2, **dadurch gekennzeichnet, dass** die über die wenigstens eine Übertragungsverbindung (20) übertragenen Pakete zu. einer Vielzahl von virtuellen Schaltungen gehören, wobei das Verfahren dann in einem Zurückbehalten von nur denjenigen Paketen besteht, die zu derselben virtuellen Schaltung wie das verlorene Paket gehören, wobei die anderen Pakete normal zum Ausgangsmultiplexer geliefert werden, und dann, wenn das verlorene Paket aufgrund seiner erneuten Übertragung durch den Sender (10) empfangen wird, in einem Liefern des verlorenen Pakets und aller zu derselben Schaltung gehörenden Pakete, die. zurückbehalten wurden, und in einem Verwerfen der folgenden Pakete, die aufgrund ihrer erneuten Übertragung durch den Sender empfangen werden und die bereits geliefert worden sind.

4. Verfahren zum Managen von Fehlern nach Anspruch 3, **dadurch gekennzeichnet, dass** es auf der Empfängerseite auf einen richtigen Empfang des verlorenen Pakets hin in einem Senden eines Bestätigungspakets zum Sender (10) besteht, das anzeigt, dass es und alle Pakete, die zurückbehalten worden sind und die geliefert worden sind, richtig empfangen worden sind, und auf der Senderseite auf einen Empfang des Bestätigungspakets hin in einem Stoppen jeder erneuten Übertragung von Paketen, die bereits übertragen worden sind, mit einer seriellen Nummer in der Sequenz, die niedriger als die durch das letzte dieser Pakets getragene oder gleich dieser ist.

5. Verfahren zum Managen von Fehlern nach Anspruch 4, **dadurch gekennzeichnet, dass** es auf der Seite des Senders (10) auf ein Speichern der Sequenznummer des vor der erneuten Übertragung des verlorenen Pakets ausgesendeten letzten Pakets hin und dann, wenn des Bestätigungspaket ein diese Nummer tragendes Paket oder vorherige Pakete bestätigt, in einem Beurteilen, dass es nicht fehlerhaft ist, und in einem Bestätigen des Pakets besteht, und in anderen Fällen in einem Beurteilen, dass es fehlerhaft ist, und in keinem Bestätigen von ihnen.

## Revendications

1. Méthode de gestion d'erreurs dans des paquets transmis sous la forme d'une séquence de paquets sur au moins une liaison (20) entre un émetteur (10) et un récepteur (30), ladite méthode consistant, du côté récepteur, lorsqu'un paquet a été correctement reçu, à délivrer ledit paquet à un multiplex de sortie et à envoyer à l'émetteur un paquet d'accusé de réception, et, lorsque le récepteur constate qu'un paquet a été perdu, à envoyer à l'émetteur un paquet d'accusé de réception négatif qui, lorsqu'il est reçu par l'émetteur, oblige l'émetteur à retransmettre ledit paquet perdu et tous les paquets suivants entre ledit paquet et le dernier paquet transmis, le récepteur (30) retenant les paquets qui ont été correctement reçus entre la détection du paquet perdu et sa réception correcte à la suite de sa retransmission par l'émetteur (10) et, lors d'une réception correcte du paquet perdu, à délivrer audit multiplex de sortie ledit paquet perdu correctement reçu et tous les paquets retenus, et à ne pas s'occuper des paquets qui sont reçus à la suite de leur retransmission par l'émetteur (10) et qui ont déjà été délivrés par le récepteur (30), **caractérisée en ce que** lors d'une réception correcte du paquet perdu, ledit récepteur envoie à l'émetteur (10) un paquet d'accusé de réception indiquant que ledit paquet perdu correctement reçu et tous les paquets qui étaient retenus et qui ont été délivrés ont été correctement reçus et **en ce que** lors de la réception dudit paquet d'accusé de réception, ledit émetteur stoppe toute retransmission de paquets qui ont déjà été transmis avec un numéro d'ordre dans la séquence inférieur ou égal à celui porté par le dernier de ces paquets.

2. Méthode de gestion d'erreurs selon la revendication 1, **caractérisée en ce que** celle-ci consiste, du côté de l'émetteur (10), à stocker le numéro d'ordre du dernier paquet transmis avant la retransmission du paquet perdu, et, si le paquet d'accusé de réception indique comme reçu un paquet portant ce numéro d'ordre ou des paquets précédents, à ne pas le juger erroné et à reconnaître ledit paquet et, dans les autres cas, à le juger erroné et à ne pas les reconnaître.

3. Méthode de gestion d'erreurs selon la revendication 1 ou 2, **caractérisée en ce que** les paquets transmis sur ladite liaison (20) appartiennent à une pluralité de circuits virtuels, ladite méthode consistant alors à retenir uniquement ces paquets qui appartiennent au même circuit virtuel que le paquet perdu, les autres paquets étant normalement délivrés au multiplex de sortie, et, lorsque le paquet perdu est reçu du fait de sa retransmission par l'émetteur (10), à délivrer ledit paquet perdu et tous les paquets appartenant au même circuit virtuel qui étaient retenus, et à ne pas s'occuper des paquets suivants qui sont reçus du fait de leur retransmission par l'émetteur et qui sont déjà délivrés.

4. Méthode de gestion d'erreurs selon la revendication 3, **caractérisée en ce qu'**elle consiste, du côté du récepteur lors d'une réception correcte du paquet perdu, à envoyer à l'émetteur (10) un paquet d'accusé de réception indiquant que celui-ci et tous les paquets qui étaient retenus et qui ont été délivrés ont été correctement reçus, et, du côté de l'émetteur lors de la réception dudit paquet d'accusé de réception, à stopper toute retransmission de paquets qui ont déjà été transmis avec un numéro d'ordre dans la séquence inférieur ou égal à celui porté par le dernier de ces paquets.

5. Méthode de gestion d'erreurs selon la revendication 4, caractérisée en ce qù'elle consiste, du côté de l'émetteur (10), à stocker le numéro d'ordre du dernier paquet transmis avant la retransmission du paquet perdu, et, si le paquet d'accusé de réception indique comme reçu un paquet portant ce numéro ou des paquets précédents, à ne pas le juger comme erroné et à indiquer comme reçu ledit paquet et, dans les autres cas, à le juger erroné et à ne pas les indiquer comme reçus.
